# EUROPÄISCHE PATENTSCHRIFT

(11) **EP 2 477 022 B1**
(45) Veröffentlichungstag und Bekanntmachung des Hinweises auf die Patenterteilung: **12.02.2014**
(21) Anmeldenummer: 11195504.3
(22) Anmeldetag: 23.12.2011
(51) Int. Cl.: G01M 15/02, B28B 5/04, B28B 17/00, G05B 19/409, G05B 19/418

(54) **Palettensystem mit einer Rüstpalette und einer Rüstpalettenaufnahme**
Palette system with a fitting palette and a fitting palette holder
Système de palettes doté d'une palette d'équipement et d'une réception de palette d'équipement

(30) Priorität: 13.01.2011 AT 162011
(43) Veröffentlichungstag der Anmeldung: 18.07.2012
(73) Patentinhaber: AVL List GmbH, 8020 Graz (AT)
(72) Erfinder: Kienzl, Franz, 8020 Graz (AT); Wetzel, Martin, 8010 Graz (AT)
(74) Vertreter: Weiss, Christian

(56) Entgegenhaltungen:
- EP-A1- 1 484 591
- WO-A1-00/60329

## Beschreibung

Die gegenständliche Erfindung betrifft ein Palettensystem mit einer Rüstpalette zur Aufnahme eines Prüflings und mit einer Rüstpalettenaufnahme, wobei an der Rüstpalettenaufnahme eine Halteeinrichtung zum Halten der Rüstpalette und an der Rüstpalette eine zugehörige Vorrichtung zum Angreifen der Halteeinrichtung vorgesehen sind und wobei an der Rüstpalettenaufnahme eine Aufnahme-Positioniereinrichtung und an der Rüstpalette eine Paletten-Positioniereinrichtung vorgesehen sind, die zum lagerichtigen Positionieren der Rüstpalette in der Rüstpalettenaufnahme zusammenwirken, sowie die Verwendung eines solchen Palettensystems in einem Prüfstand.

Zur Steigerung der Produktivität des Prüfstandsbetriebs zum Prüfen von Verbrennungsmotoren, Getrieben oder Antriebssträngen ist es bekannt, den Prüfling abseits des Prüfstandes auf Rüstpaletten zu montieren und vorzurüsten und anschließend den Prüfling auf den Rüstpaletten in den Prüfstand zu bringen. Damit reduzieren notwendige Rüstzeiten nicht mehr die Prüfzeiten am Prüfstand, da Rüstarbeiten bereits abseits des Prüfstandes und unabhängig vom Prüfstandsbetrieb durchgeführt werden können. Solche Rüstpaletten sind z.B. aus der EP 1 484 591 A1 oder der WO 00/60329 A1 bekannt und zeigen eine Palettenkonstruktion, auf der der Prüfling angeordnet und vorgerüstet wird. Die Palettenkonstruktion kann entweder auf Rädern oder Rollen selbstfahrend oder aber auch nicht selbstfahrend ausgeführt sein, wobei die Palette im letzten Fall z.B. mittels Hubstaplern oder anderen geeigneten Transportmitteln, wie z.B. selbstfahrende Transportfahrzeuge, bewegt werden kann. Der Vorgang des Vorrüstens kann dabei das Anordnen von Messtechnik, wie z.B. Sensoren, am Prüfling, das Verbinden von am Prüfling angeordneter Messtechnik mit Auswerteeinheiten an der Palette, das Füllen des Prüflings mit Medien, wie z.B. Schmieröl, und/oder das Verbinden von Medienanschlüssen (z.B. für Kühlwasser, Kraftstoff, Luft, etc.) an der Palette mit den entsprechenden Anschlüssen am Prüfling umfassen. Beim Einbringen des Prüflings in den Prüfstand, oder danach, können die Medienanschlüsse mit den entsprechenden Medienversorgungen im Prüfstand und der Prüfling mit der Antriebs- und Belastungsmaschine (Dynamometer oder Dyno) verbunden werden und die Verbindung zur Prüfstandssteuereinheit hergestellt werden, womit der Prüfling und der Prüfstand einsatzbereit sind. Auf diese Weise lassen sich die direkt im Prüfstand notwendigen Rüstarbeiten auf ein Minimum reduzieren. Darüber hinaus kann die Messtechnik (auch z.B. die ECU) bereits außerhalb des Prüfstands kalibriert bzw. auf ihre Funktion hin überprüft werden. Bei entsprechender Ausrüstung des Rüstraumes ist auch ein Vorstart bzw. Vortest des Prüflings möglich.

Der Prüfling bzw. die Rüstpalette mit dem Prüfling muss im Prüfstand natürlich auch exakt zum Dyno ausgerichtet werden, damit die An- oder Abtriebswelle des Prüflings mit der Welle des Dynos fluchtend angeordnet werden kann. Dazu sind in der Regel an der Palettenkonstruktion entsprechende Aufnahmen für den Prüfling vorgesehen. Ebenso können an der Palettenkonstruktion und/oder im Prüfstand entsprechende Vorrichtungen vorgesehen sein, mit denen die Palettenkonstruktion im Prüfstand lagerichtig positioniert werden kann. Die WO 96/33395 A1 zeigt eine Rüstpalette und einen Prüfstand mit Einrichtungen zum einfachen lagerichtigen Positionieren der Rüstpalette bzw. des darauf angeordneten Prüflings im Prüfstand. Dazu wird die Rüstpalette mit dem Prüfling in eine Aufnahme im Prüfstand geschoben, wobei die Rüstpalette durch eine Führung der Räder vorpositioniert wird und anschließend wird zum genauen Positionieren ein Bolzen in eine Ausnehmung an der Rüstpalette geschoben. Danach kann die Rüstpalette in dieser Position im Prüfstand mittels Halteeinrichtungen fixiert werden. Bei dieser Rüstpalette müssen allerdings sämtliche notwendigen Schritte manuell ausgeführt werden, z.B. muss die Positioniereinrichtung manuell aktiviert und wieder gelöst werden, müssen die Halteeinrichtungen manuell gespannt und wieder gelöst werden und müssen die Medienversorgungen manuell an die entsprechenden Medienanschlüsse angeschlossen werden. All das verlängert natürlich die erforderliche Zeit zum Umrüsten des Prüfstandes und verkürzt damit die verfügbare Prüfzeit.

Aus der US 4 941 347 A ist wiederum ein Prüfstand in Form eines Drehtellers bekannt, wobei auf dem Drehteller in einer Anzahl von Prüfstationen jeweils ein auf einer Rüstpalette angeordneter Prüfling aufgenommen werden kann. In einem Abschnitt des Drehtellers kann eine Prüfstation mit Medienanschlüssen verbunden werden und es können bestimmte Prüfläufe vorgenommen werden. Ein solcher Prüfstand ist allerdings unflexibel, da die Taktzeiten der Drehbewegung bzw. die Drehgeschwindigkeit auf die einzelnen Prüfläufe abgestimmt sein muss und daher ein Prüfling unter Umständen länger als notwendig im Prüfstand verweilen muss. Dadurch kann es aufgrund unterschiedlicher Prüfzeiten für unterschiedliche Prüfläufe zu stark unterschiedlichen Auslastungen der einzelnen Prüfstationen kommen, was einen solchen Prüfstand auch ineffizient macht.

Es ist nun eine Aufgabe der Erfindung ein Palettensystem und einen Prüfstand zur Aufnahme des Palettensystems anzugeben, die eine rasche und effektive Umrüstung und einen effizienten Betrieb des Prüfstandes ermöglichen.

Diese Aufgabe wird erfindungsgemäß dadurch gelöst, dass an der Rüstpalette eine Paletten-Dockingplatte mit einer Anzahl von Paletten-Medienanschlüssen und an der Rüstpalettenaufnahme eine Aufnahme-Dockingeinheit mit einer Aufnahme-Dockingplatte mit einer Anzahl von gegengleichen Aufnahme-Medienanschlüssen vorgesehen ist, wobei die Paletten-Dockingplatten und/oder die Aufnahme-Dockingplatte beweglich angeordnet ist sind und eine bewegliche Dockingplatte zur anderen Dockingplatte zustellbar ist und damit durch Eingriff der Paletten-Medienanschlüsse in die Aufnahme-Medienanschlüsse eine Medienversorgung herstellbar ist und die Halteeinrichtung, die Aufnahme-Positioniereinrichtung und die Aufnahme-Dockingplatten unabhängig voneinander und relativ zueinander positionierbar sind.

Durch diesen erfindungsgemäßen Ansatz müssen zur Anordnung der Rüstpalette in der Rüstpalettenaufnahme und zum Herstellen der notwendigen Medienversorgungen lediglich kleine Massen, nämlich die Dockingplatte oder die Dockingplatten, bewegt werden und nicht wie bisher die Rüstpalette inklusive des Prüflings und etwaiger Zusatzaufbauten. Dadurch wird ein sehr kompaktes und energieeffizientes Design ermöglicht und es ist damit weiters auch eine rasche Umrüstung des Prüfstandes möglich.

Wenn an der Rüstpalettenaufnahme ein Führungsmittel zur Ausrichtung der Rüstpalette vorgesehen ist, kann die Rüstpalette auf einfachem Weg grob vorpositioniert werden, was die endgültige Positionierung der Rüstpalette in der Rüstpalettenaufnahme bzw. im Prüfstand vereinfacht.

Die Rüstpalette kann auf einfache Weise in der Rüstpalettenaufnahme bzw. im Prüfstand fixiert werden, wenn an der Halteeinrichtung ein Grundrahmen vorgesehen ist, an dem ein Haltearm verschwenkbar und axial verschiebbar angeordnet ist. Damit kann die Rüstpalette sicher und automatisch positioniert und fixiert werden.

Um den Prüfling einfach, rasch und sicher in der Rüstpalettenaufnahme bzw. im Prüfstand zu positionieren und zu fixieren, sind an der Rüstpalette bevorzugt Aufnahmemittel zum lagerichtigen Halten und Fixieren des Prüflings angeordnet.

Zum Verarbeiten der Signale der Messtechnik (Sensoren) kann an der Rüstpalette auch eine Signalkonditionierungseinheit vorgesehen sein, die über Leitungen mit am Prüfling angeordneter Messtechnik verbunden ist. Damit wird es möglich die Rüstpalette abseits des Prüfstands in einem Rüstbereich komplette vorzurüsten und dessen Funktion zu testen.

Der Rüstvorgang der Prüfpalette wird erheblich vereinfacht, wenn an der Rüstpalette eine Positionierlehre zur Ausrichtung des Prüflings auf der Rüstpalette angeordnet ist. Damit kann der Prüfling sehr einfach und rasch lagerichtig auf der Rüstpalette positioniert werden.

Um den Prüfling und die Funktion der vorgerüsteten Prüfpalette im Rüstbereich einfach testen zu können, kann an der Rüstpalette eine Fixiereinrichtung vorgesehen sein, die mit dem Abtriebsflansch des Prüflings verbindbar ist.

Die gegenständliche Erfindung wird nachfolgend unter Bezugnahme auf die Figuren 1 bis 7, die vorteilhafte, nicht einschränkende Ausgestaltungen der Erfindung zeigen, beschrieben.

Dabei zeigt
- Fig. 1: die Anordnung des Palettensystems im Prüfstand,
- Fig. 2: eine Übersicht der einzelnen Komponenten des Palettensystems,
- Fig. 3: eine Rüstpalettenaufnahme des Palettensystems,
- Fig. 4: eine Aufnahme-Positioniereinrichtung des Palettensystems,
- Fig. 5: eine Rüstpalette-Halteeinrichtung des Palettensystems,
- Fig. 6: eine Rüstpalette des Palettensystems und
- Fig. 7: einen Prüfstand mit Palettensystem, Prüfling und Dynamometer.

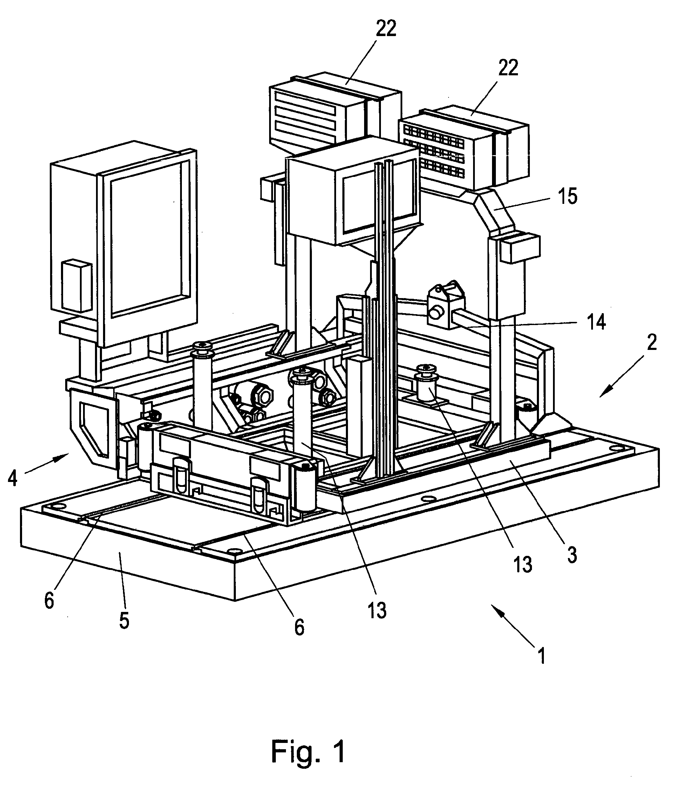

In Fig. 1 ist ein Teil eines Prüfstandes 1 mit einem erfindungsgemäßen Palettensystem 2 dargestellt. Dabei ist in einer Rüstpalettenaufnahme 4 eine Rüstpalette 3 angeordnet. Sowohl Rüstpalettenaufnahme 4, als auch Rüstpalette 3 sind im Prüfstand 1 auf einer Grundplatte 5 angeordnet.

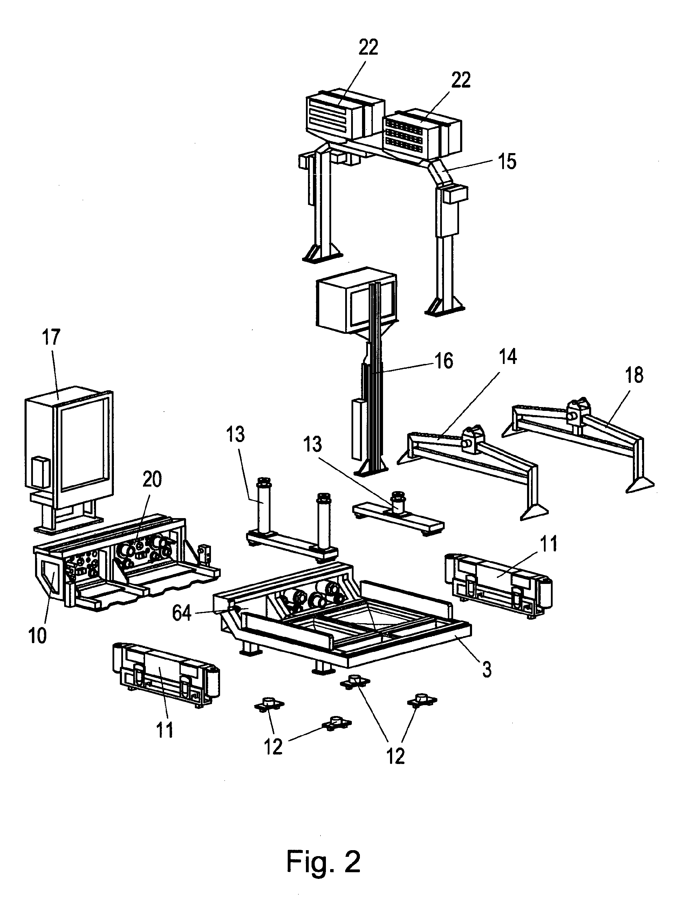

Die einzelnen Teile des Palettensystems 2 werden nachfolgend anhand der Figuren 1 bis 6 beschrieben. Wie insbesondere aus Fig. 2 hervorgeht, sind alle Einzelteile des Palettensystems 2 modulare separate Einheiten, die unabhängig voneinander und relativ zueinander angeordnet werden können, was die Flexibilität und Modularität im Aufbau des Palettensystems 2 wesentlich verbessert.

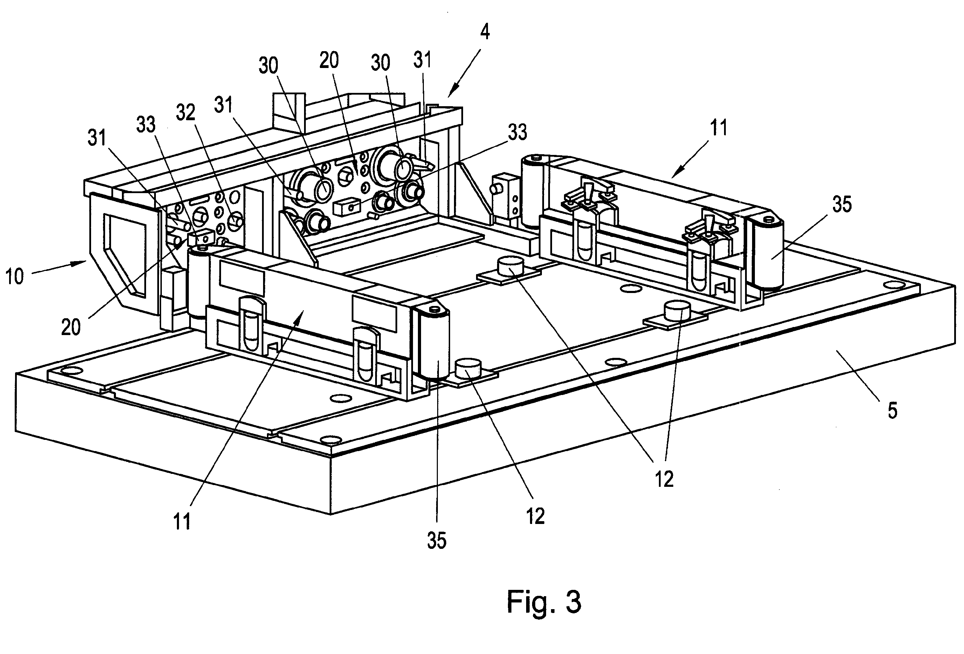

Fig. 3 zeigt nur die Rüstpalettenaufnahme 4 mit der Aufnahme-Dockingeinheit 10, einer Rüstpalette-Halteeinrichtung 11 zum Halten der Rüstpalette 3 und einer Aufnahme-Positioniereinrichtung 12 zum Ausrichten und lagerichtigen Halten der Rüstpalette 3 im Prüfstand 1. Sämtliche Teile sind unabhängig voneinander und relativ zueinander positionierbar und anordenbar, z.B. in Nuten 6, vorgesehenen Aufnahmebohrungen oder anderen geeigneten Einrichtungen in der Grundplatte 5. Damit kann die Rüstpalettenaufnahme 4 sehr einfach an unterschiedliche Rüstpaletten 3 angepasst werden, ohne die Einzelteile der Rüstpalettenaufnahme 4 ändern zu müssen.

An der versorgungsseitigen Aufnahme-Dockingeinheit 10 sind eine oder mehrere Aufnahme-Dockingplatten 20 angeordnet, die relativ zur Aufnahme-Dockingeinheit 10 bzw. relativ zur Rüstpalettenaufnahme 4 bewegbar sein können. Die Aufnahme-Dockingplatten 20 weisen verschiedene Medienanschlüsse 30, 32 auf und können auch Aufnahme-Zentriermittel 31, z.B. Positionierzapfen, und Verriegelungsmittel 33 aufweisen. Weiters können an den Aufnahme-Dockingplatten 20 auch elektrische Anschlüsse vorgesehen sein, z.B. für eine Stromversorgung oder für einen Steuerbus, einen Datenbus oder Signalleitungen.

Die Rüstpalettenaufnahme 4, hier konkret die Rüstpalette-Halteeinrichtungen 11, ist mit Führungsmitteln 35, hier Rollen, für eine Grobausrichtung der Rüstpalette 3 in der Rüstpalettenaufnahme 4 bzw. am Prüfstand 1 ausgestattet und beinhaltet auch Spannmittel für die automatische Fixierung der Rüstpalette 3 am Prüfstand 1, wie weiter unten noch ausgeführt wird.

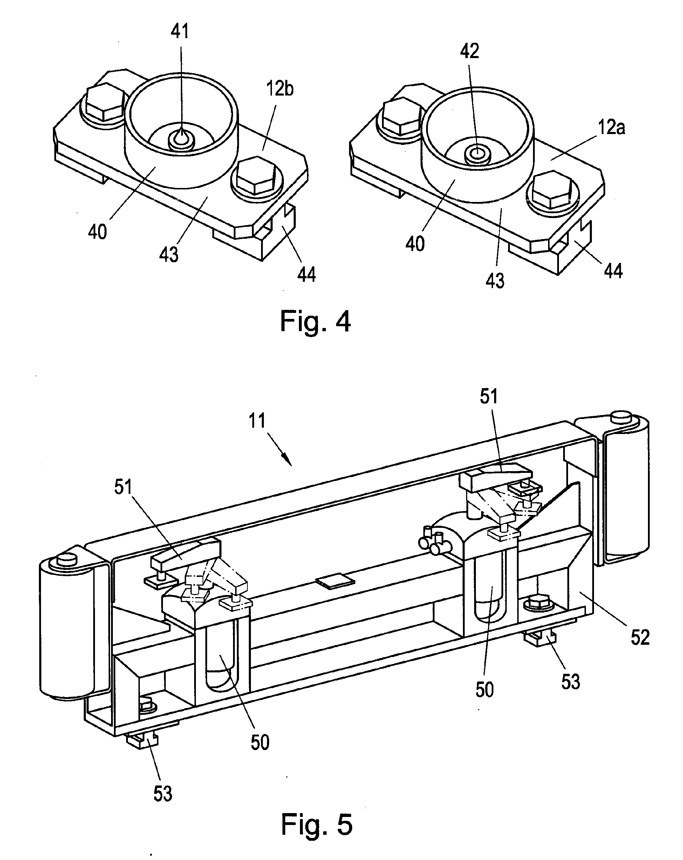

Als Aufnahme-Positioniereinrichtung 12, Fig. 4, können Zentrieraufnahmen 40 mit einer kegelförmigen Innenkontur vorgesehen sein. Am Grund der kegelförmigen Innenkontur können auch Zentrierstifte 41 oder Zentrierlöcher 42 für eine exakte Ausrichtung der Rüstpalette 3 am Prüfstand 1 vorgesehen sein. Die Innenkontur dient z.B. einer groben Vorpositionierung und einem einfacheren Abstellen der Rüstpalette 3 in der Rüstpalettenaufnahme 4. Die exakte Ausrichtung der Rüstpalette 3 kann mittels der Zentrierstifte 41 und der Zentrierlöcher 42 erfolgen. Die Aufnahme-Positioniereinrichtungen 12a, 12b sind auf Platten 43 angeordnet, die über entsprechende Mittel, z.B. Klemmschrauben 44, in den Nuten der Grundplatte 5 verschoben und angeordnet werden können.

Die Halteeinrichtung 11 der Rüstpalettenaufnahme 11, Fig. 5, umfasst im gezeigten Ausführungsbeispiel zwei Hydraulik- oder Pneumatikschwenkzylinder 50, mittels dem jeweils ein Haltearm 51 geschwenkt und axial verschoben werden kann. Zum Fixieren der Rüstpalette 3 wird der Haltearm 51 zuerst in Richtung der Rüstpalette 3 geschwenkt und anschließend der Haltearm 51 in Richtung der Rüstpalette 3 verschoben, bis dieser an der zugehörigen Angriffsfläche an der Rüstpalette 3 anliegt und diese somit spannt und fixiert. Selbstverständlich kann die Halteeinrichtung 11 auch andere Mittel zum Fixieren der Rüstpalette 3 aufweisen. Die Halteeinrichtung 11 umfasst weiters einen Grundrahmen 52, der über entsprechende Mittel, z.B. Klemmschrauben 53, in den Nuten der Grundplatte 5 verschoben und angeordnet werden kann. Vorzugsweise kommen in der Rüstpalettenaufnahme 4 zwei Halteeinrichtungen 11 zum Einsatz.

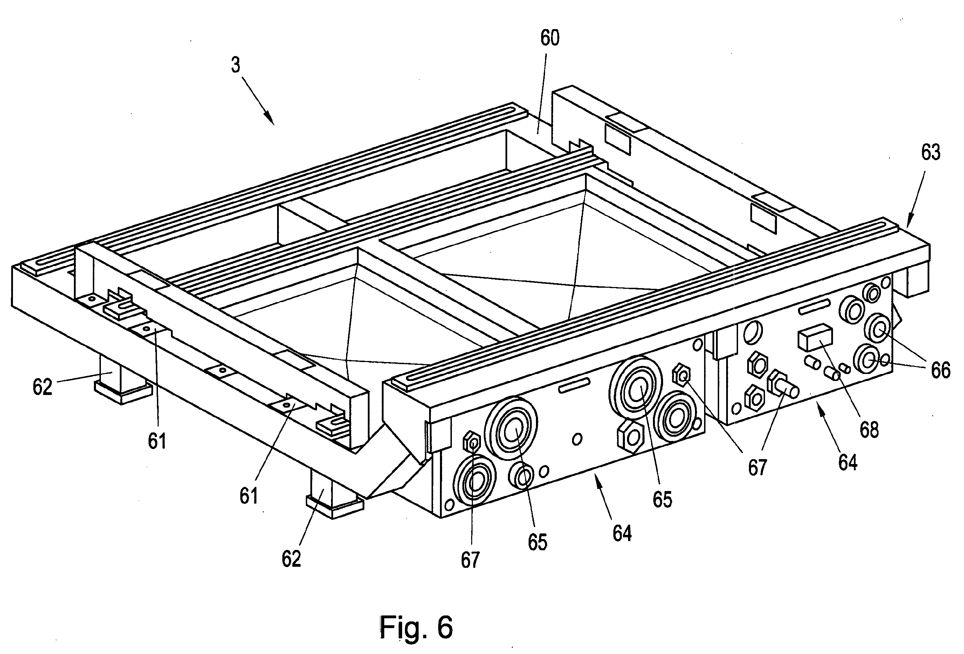

Die Rüstpalette 3, Fig. 6, umfasst im gezeigten Ausführungsbeispiel einen Palettenrahmen 60 an dem eine Vorrichtung 61, hier zwei, zum Angreifen der Halteeinrichtung 11 der Rüstpalettenaufnahme 4 angeordnet ist. Die Vorrichtung 61 ist hier eine Angriffsfläche für den Haltearm 51 der Halteeinrichtung 11. Am Palettenrahmen 60 sind weiters Palettenfüße 62 vorgesehen, die dazu dienen, die Palette außerhalb des Prüfstandes 1 abstellen zu können. Weiters sind an der Unterseite des Palettenrahmens 60 hier nicht dargestellte Paletten-Positioniereinrichtungen angeordnet, die zu den Aufnahme-Positioniereinrichtungen 12 der Rüstpalettenaufnahme 4 gegengleiche Form haben. Die Rüstpalette 3 wird mittels der Paletten-Positioniereinrichtungen in den Aufnahme-Positioniereinrichtungen 12 bzw. damit in der Rüstpalettenaufnahme 4 abgestellt. Auf diese Weise kann die Rüstpalette 3 exakt in der Rüstpalettenaufnahme 4 bzw. somit im Prüfstand 1 positioniert werden.

Weiters ist an der Rüstpalette 3 eine Paletten-Dockingeinheit 63 mit einer oder mehreren Paletten-Dockingplatten 64 angeordnet. Die Paletten-Dockingplatte 64 weist zur Verbindung mit der versorgungsseitigen Aufnahme-Dockingplatten 20 gegengleiche Paletten-Medienanschlüsse 65, 66 und/oder elektrische Anschlüsse und/oder Paletten-Positioniermittel 67, z.B. Zentrierbuchsen, und/oder Verriegelungsmechanismen 68 auf. Die Paletten-Dockingplatten 64 können relativ zur Paletten-Dockingeinheit 63 bzw. relativ zur Rüstpalette 3 bewegbar angeordnet sein.

Zur Herstellung der Medienversorgung bewegen sich bevorzugt die prüfstandsseitigen Aufnahme-Dockingplatten 20 zu den fest angeordneten Paletten-Dockingplatten 64 der Rüstpalette 3. Das könnte aber auch umgekehrt sein, oder es könnten auch beide Dockingplatten, die Aufnahme-Dockingplatten 20 und die Paletten-Dockingplatten 64, bewegt werden.

An der Rüstpalette 3 können noch Aufnahmemittel 13 zum lagerichtigen Halten und Fixieren des Prüflings 70 angeordnet sein, Fig. 2. Diese Aufnahmemittel 13 sind vorteilhaft auf der Rüstpalette 3 unabhängig voneinander und relativ zueinander positionierbar angeordnet, um die Rüstpalette 3 einfach für unterschiedliche Prüflinge verwenden zu können. Diese Aufnahmemittel sind bevorzugt in allen drei Raumrichtungen (X, Y, Z) einstellbar.

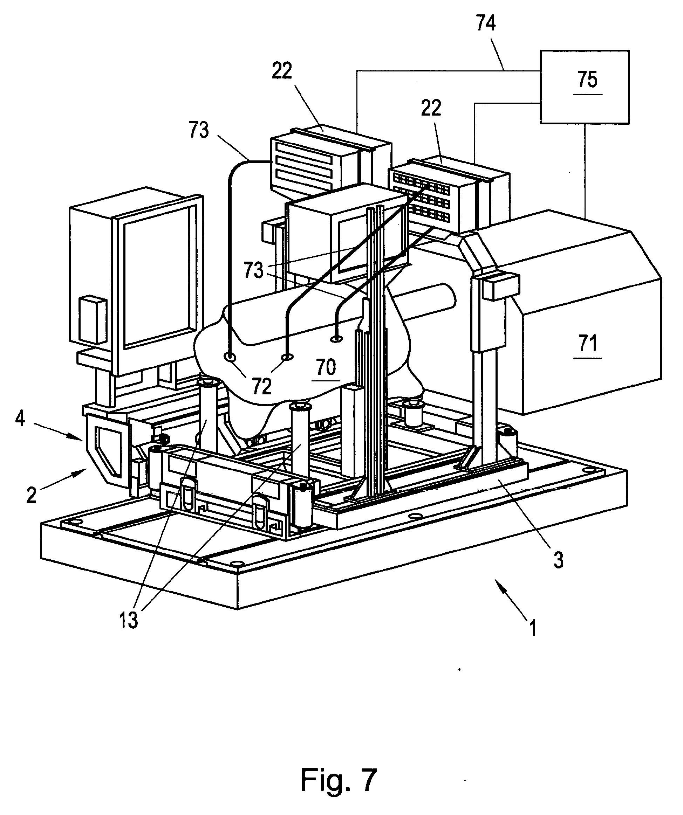

Weiters können an der Rüstpalette 3 auch Signalkonditionierungseinheiten 22 angeordnet sein, z.B. auf einem an der Rüstpalette 3 befestigten Portalrahmen 15, Fig. 2. Die am Prüfling 70 angeordnete Messtechnik 72 wird über entsprechenden Leitungen 73 mit einer Signalkonditionierungseinheit 22 verbunden, Fig. 7. Von der Signalkonditionierungseinheit 22 werden die Sensorsignale z.B. über Busleitungen 74 an die Prüfstandssteuereinheit 75 weitergeleitet.

Weiters kann eine Verbindungseinheit 16 vorgesehen sein, Fig. 2, die elektrische Komponenten, wie z.B. eine Spannungsversorgung für den Prüfling, z.B. für die Steuereinheit des Prüflings oder dem Startermotor des Prüflings, Einheiten zur Aufnahme des Kurbelwellenwinkels der Kurbelwelle des Prüflings oder zur Aufnahme der Zündwinkel des Prüflings, elektrische Klemmen, etc., beinhaltet. Die Verbindungseinheit 16 ist ebenfalls mit entsprechenden (nicht dargestellten) elektrischen Leitungen mit den zugehörigen Komponenten am Prüfling 70 oder Prüfstand verbunden.

Ebenso kann ein Steuerschrank 17 angeordnet sein, Fig. 2, der eine PLC (Programmable Logic Controller), elektrische und pneumatische Komponenten für das automatische Klemmen der Rüstpalette und/oder für die Herstellung/Verriegelung der Medienversorgung, beinhalten kann. Weiters können alle erforderlichen Sensoren für das Positionieren und Klemmen der Rüstpalette 3 und für die Herstellung/Verriegelung der Medienversorgung in diesem Steuerschrank 17 zusammenlaufen. Es kann vorgesehen sein, die Schnittstelle zum Prüfstandsautomatisationssystem so klein wie möglich zu halten, wodurch auch ein autarker Betrieb ohne Automatisationssystem möglich ist.

An der Rüstpalette 3 kann außerdem eine Positionierlehre 14 oder eine Fixiereinrichtung 18 für den Prüfling 70 angeordnet werden, Fig. 2. Die Positionierlehre 14 dient dazu, den Prüfling 70 abseits des Prüfstandes 1 in Bezug auf den Dyno im Prüfstand 1 exakt auszurichten, z. B. mittels der Aufnahmemittel 13. Darüber hinaus kann die Positionierlehre 14 nicht nur die Ausrichtung des Prüflings 70 auf der Rüstpalette 3 ermöglichen, sondern unterstützt vorteilhaft auch die Ausrichtung der Rüstpalettenaufnahme 4 zum Dynamometer im Zuge der Erstinbetriebnahme. Die Positionierlehre 14 kann vorteilhaft auf beiden Seiten der Rüstpalette 3 montiert werden kann. Die Positionierlehre 14 bevorzugt so konzipiert, dass verschiedene Achshöhen des Dynamometers, mit nur einer Positionierlehre 14 abgedeckt werden können. Damit kann sichergestellt werden, dass der Prüfling 70 im Prüfstand 1 mit der Rüstpalette 3 lagerichtig positioniert wird.

Im Rüstbereich wird der Prüfling 70 ohne elektrische Belastungseinheit betrieben, um die Funktion des Prüflings 70 bzw. der Sensorik zu überprüfen bzw. die Messtechnik zu kalibrieren. Dabei kann es speziell bei Dieselmotoren vorkommen, dass der Prüfling 70 beim erstmaligen Start, insbesondere beim Testen von Prototypen, Öl ansaugt und es zu einem Durchdrehen des Prüflings 70 kommen kann. Um dies zu verhindern wurde die Fixiereinrichtung 18 konzipiert, welche mit dem Abtriebsflansch des Prüflings 70 verbunden wird. Die Fixiereinheit 18 kann dazu passende Flanschadapter aufweisen. Kommt es zu einem Durchdrehen des Prüflings 70 wird die Fahrzeugkupplung des Prüflings 70 geschlossen und der Prüfling 70 abgebremst (quasi "abgewürgt"). Die Fixiereinrichtung 18 dient dazu, ein Durchdrehen des Prüflings 70 während des erstmaligen Prüflaufs zu verhindern und hat sicherheitstechnische Relevanz im Rüstbereich.

Nachfolgend wird die Funktion des erfindungsgemäßen Palettensystems 2 und der Ablauf eines Rüstvorganges beschrieben. Der Prüfstand 1 wird einmal eingerichtet, indem darin die Rüstpalettenaufnahme 4 mit ihren Einzelteilen zur Aufnahme der Rüstpalette 3 montiert wird. Die exakte Ausrichtung der Rüstpalettenaufnahme 4 kann z.B. mit der Positionierlehre 14 eingestellt werden. An einem Rüstplatz abseits des Prüfstandes 1 wird eine Rüstpalette 3 vorgerüstet, indem der Prüfling 70, z.B. ein Verbrennungsmotor, ein E-Motor, ein Getriebe oder ein Antriebsstrang, auf den Aufnahmemitteln 13, z.B. mit Hilfe der Positionierlehre 14, positioniert und befestigt wird. Am Prüfling 70 können kann nun die gewünschte Messtechnik 72, z.B. Sensoren, angebracht werden und mit geeigneten Leitungen 73 mit den Signalkonditionierungseinheiten 22 verbunden werden. Gegebenenfalls kann der Prüfling 70 auch bereits am Rüstplatz mit Öl Medien, wie z.B. Öl, Kühlwasser, etc., gefüllt werden und erste einfache Prüfläufe zur Überprüfung der Funktion des Prüflings 70 durchgeführt werden. Darüber hinaus kann am Rüstplatz sämtliche Messtechnik 72 bereits kalibriert und in Bezug auf ihre einwandfreie Funktion überprüft werden.

Die so gerüstete Rüstpalette 3 wird nun, z.B. mittels eines Hubstaplers, in den Prüfstand 1 gebracht, wo diese in der Rüstpalettenaufnahme 4 abgestellt wird und dabei durch die Aufnahme-Positioniereinrichtungen 12 und Paletten-Positioniereinrichtungen exakt lagerichtig positioniert wird. Nun werden die Halteeinrichtungen 11 der Rüstpalettenaufnahme 4, z. B. per Knopfdruck am Schaltschrank 17 oder per Fernbedienung von einem Bedienplatz, aktiviert, die die Rüstpalette 3 in der Rüstpalettenaufnahme 4 fixieren. Ebenso wird werden eine oder mehrere bewegliche Dockingplatten 20, 64 aktiviert, bis die Dockingplatten 20, 64 mit ihren Medienanschlüssen 30, 32, 65, 66, Verrieglungsmechanismen 33, 68, elektrischen Anschlüssen und den Zentriermitteln 31, 67 im Eingriff sind und dadurch die Medienversorgung, z.B. für Öl, Kraftstoff, Kühlflüssigkeit, Luft, und gegebenenfalls die gewünschte elektrische Verbindung hergestellt ist. Die Signalkonditionierungseinheiten 22 werden noch mit der Prüfstandssteuerung 75 verbunden, z.B. über einen Kabelstrang oder über die elektrischen Anschlüsse der Dockingplatten 20, 64. Damit ist der Prüfstand 1 einsatzbereit und das gewünschte Prüfprogramm kann abgefahren werden. Das Entfernen der Rüstpalette 3 aus dem Prüfstand 1 erfolgt im Wesentlichen in umgekehrter Reihenfolge.

## Patentansprüche

1. Palettensystem mit einer Rüstpalette (3) zur Aufnahme eines Prüflings (70) und mit einer Rüstpalettenaufnahme (4), wobei an der Rüstpalettenaufnahme (4) eine Halteeinrichtung (11) zum Halten der Rüstpalette (3) und an der Rüstpalette (3) eine zugehörige Vorrichtung (61) zum Angreifen der Halteeinrichtung (11) vorgesehen sind und wobei an der Rüstpalettenaufnahme (4) eine Aufnahme-Positioniereinrichtung (12) und an der Rüstpalette (3) eine Paletten-Positioniereinrichtung vorgesehen sind, die zum lagerichtigen Positionieren der Rüstpalette (3) in der Rüstpalettenaufnahme (4) zusammenwirken, **dadurch gekennzeichnet, dass** an der Rüstpalette (3) eine Paletten-Dockingplatte (64) mit einer Anzahl von Paletten-Medienanschlüssen (65, 66) und an der Rüstpalettenaufnahme (4) eine Aufnahme-Dockingeinheit (10) mit einer Aufnahme-Dockingplatte (20) mit einer Anzahl von gegengleichen Aufnahme-Medienanschlüssen (30, 32) vorgesehen ist, wobei die Paletten-Dockingplatte (64) und/oder die Aufnahme-Dockingplatte (20) beweglich angeordnet ist und eine bewegliche Dockingplatte (20, 64) zur anderen Dockingplatte (64, 20) zustellbar ist und damit durch Eingriff der Paletten-Medienanschlüsse (65, 66) in die Aufnahme-Medienanschlüsse (30, 32) eine Medienversorgung herstellbar ist und die Halteeinrichtung (11), die Aufnahme-Positioniereinrichtung (12) und die Aufnahme-Dockingplatte (20) unabhängig voneinander und relativ zueinander positionierbar sind.

2. Palettensystem nach Anspruch 1, **dadurch gekennzeichnet, dass** an der Rüstpalettenaufnahme (4) ein Führungsmittel (35) zur Ausrichtung der Rüstpalette (3) vorgesehen ist.

3. Palettensystem nach Anspruch 1, **dadurch gekennzeichnet, dass** die Halteeinrichtung (11) einen Grundrahmen (52) umfasst, an dem ein Haltearm (51) verschwenkbar und axial verschiebbar angeordnet ist.

4. Palettensystem nach Anspruch 1, **dadurch gekennzeichnet, dass** an der Rüstpalette (3) Aufnahmemittel (13) zum lagerichtigen Halten und Fixieren des Prüflings (70) angeordnet sind.

5. Palettensystem nach Anspruch 1, **dadurch gekennzeichnet, dass** an der Rüstpalette (3) eine Signalkonditionierungseinheit (22) vorgesehen ist, die über Leitungen (73) mit am Prüfling (70) angeordneter Messtechnik (72) verbunden ist.

6. Palettensystem nach Anspruch 1, **dadurch gekennzeichnet, dass** an der Rüstpalette (3) eine Positionierlehre (14) zur Ausrichtung des Prüflings (70) auf der Rüstpalette (3) angeordnet ist.

7. Palettensystem nach Anspruch 1, **dadurch gekennzeichnet, dass** an der Rüstpalette (3) eine Fixiereinrichtung (18) vorgesehen ist, die mit dem Abtriebsflansch des Prüflings (70) verbindbar ist.

8. Prüfstand mit einem Palettensystem nach einem der Ansprüche 1 bis 7, **dadurch gekennzeichnet, dass** im Prüfstand (1) eine Grundplatte (5) angeordnet ist und sowohl Rüstpalette (3), als auch Rüstpalettenaufnahme (4) auf der Grundplatte (5) angeordnet sind.

9. Prüfstand nach Anspruch 8, **dadurch gekennzeichnet, dass** eine Prüfstandssteuereinheit (75) vorgesehen ist, die mit der Signalkonditionierungseinheit (22) verbunden ist.

10. Prüfstand nach Anspruch 8, **dadurch gekennzeichnet, dass** ein Steuerschrank (17) vorgesehen ist, der die Bewegung der beweglichen Teile des Palettensystems (2) steuert und überwacht.

## Claims

1. A pallet system with a setup pallet (3) for receiving a test component (70) and with a setup pallet receptacle (4), wherein a holding device (11) for holding the setup pallet (3) is provided on the setup pallet receptacle (4) and an associated fixture (61) for engaging the holding device (11) is provided on the setup pallet (3), and wherein a receptacle positioning device (12) is provided on the setup pallet receptacle (4) and a pallet positioning device is provided on the setup pallet (3), which positioning devices interact for correct positioning of the setup pallet (3) in the setup pallet receptacle (4), **characterized in that** a pallet docking plate (64) with a number of pallet media connections (65, 66) is provided on the setup pallet (3), and a receptacle docking unit (10) having a receptacle docking plate (20) with a number of matching receptacle media connections (30, 32) is provided on the setup pallet receptacle (4), wherein the pallet docking plate (64) and/or the receptacle docking plate (20) are/is arranged movably and a movable docking plate (20, 64) can be fed toward the other docking plate (64, 20) and thus, with the pallet media connections (65, 66) engaging in the receptacle media connections (30, 32), a media supply can be established, and the holding device (11), the receptacle positioning device (12) and the receptacle docking plate (20) can be positioned independently of one another and relative to one another.

2. The pallet system according to claim 1, **characterized in that** a guide means (35) for aligning the setup pallet (3) is provided on the setup pallet receptacle (4).

3. The pallet system according to claim 1, **characterized in that** the holding device (11) comprises a base frame (52) on which a support arm (51) is arranged in a swivelable and axially displaceable manner.

4. The pallet system according to claim 1, **characterized in that** receiving means (13) for holding and fixing the test component (70) in the correct position are arranged on the setup pallet (3).

5. The pallet system according to claim 1, **characterized in that** on the setup pallet (3), a signal conditioning unit (22) is provided which is connected via lines (73) to a measuring system (72) arranged on the test component (70).

6. The pallet system according to claim 1, **characterized in that** a positioning gauge (14) for aligning the test component (70) on the setup pallet (3) is arranged on the setup pallet (3).

7. The pallet system according to claim 1, **characterized in that** on the setup pallet (3), a fixing device (18) is provided which can be connected to the output flange of the test component (70).

8. A test stand with a pallet system according to any one of the claims 1 to 7, **characterized in that** a base plate (5) is arranged in the test stand (1) and the setup pallet (3) as well as the setup pallet receptacle (4) are arranged on the base plate (5).

9. The test stand according to claim 8, **characterized in that** a test stand control unit (75) is provided which is connected to the signal conditioning unit (22).

10. The test stand according to claim 8, **characterized in that** a control cabinet (17) is provided which controls and monitors the movable parts of the pallet system (2).

## Revendications

1. Système de palettes comportant une palette de préparation (3) destinée à recevoir une éprouvette (70) et un logement de palette de préparation (4), où sur le logement de palette de préparation (4) est prévu un dispositif de maintien (11) pour maintenir la palette de préparation (3) et où sur la palette de préparation (3) est prévu un dispositif associé (61) pour s'engager avec le dispositif de maintien (11), et où sur le logement de palette de préparation (4) est prévu un dispositif de positionnement de logement (12) et où sur la palette de préparation (3) est prévu un dispositif de positionnement de palette, lesquels coopèrent pour positionner la palette de préparation (3) en bonne position dans le logement de palette de préparation (4), **caractérisé par le fait que**, sur la palette de préparation (3) est prévue une plaque de raccordement de palette (64) ayant un nombre de raccords de fluides de palette (65, 66) et sur le logement de palette de préparation (4) est prévue une unité de raccordement de logement (10) comportant une plaque de raccordement de logement (20) ayant un nombre de raccords de fluides de logement complémentaires (30, 32), la plaque de raccordement de palette (64) et/ou la plaque de raccordement de logement (20) étant disposés mobiles et une plaque de raccordement mobile (20, 64) étant apte à être rapprochée de l'autre plaque de raccordement (64, 20) et une alimentation en fluides pouvant ainsi être établie par engagement des raccords de fluides de palette (65, 66) dans les raccords de fluides de logement, et le dispositif de maintien (11), le dispositif de positionnement de logement (12) et la plaque de raccordement de logement (20) étant aptes à être positionnés indépendamment les uns des autres et les uns par rapport aux autres.

2. Système de palettes selon la revendication 1, **caractérisé par le fait que** sur le logement de palette de préparation (4) est prévu un moyen de guidage (35) pour aligner la palette de préparation (3).

3. Système de palettes selon la revendication 1, **caractérisé par le fait que** le dispositif de maintien (11) comprend un châssis de base (52) sur lequel un bras de maintien (51) est monté pivotant et axialement mobile.

4. Système de palettes selon la revendication 1, **caractérisé par le fait que** des moyens de logement (13) pour maintenir et fixer l'éprouvette (70) en bonne position sont agencés sur la palette de préparation (3).

5. Système de palettes selon la revendication 1, **caractérisé par le fait que** sur la palette de préparation (3) est prévue une unité de conditionnement de signal (22) qui est connectée par des lignes (73) à une technique de mesure (72) montée sur l'éprouvette (70).

6. Système de palettes selon la revendication 1, **caractérisé par le fait qu'**un gabarit de positionnement (14) est agencé sur la palette de préparation (3) pour aligner l'éprouvette (70) sur la palette de préparation (3).

7. Système de palettes selon la revendication 1, **caractérisé par le fait que** sur la palette de préparation (3) est prévu un dispositif de fixation (18) qui est apte à être connecté au flasque de sortie de l'éprouvette (70).

8. Banc d'essai ayant un système de palettes selon l'une des revendications 1 à 7, **caractérisé par le fait que**, dans le banc d'essai (1), est agencée une plaque de base (5) et que non seulement la palette de préparation (3) mais encore le logement de palette de préparation (4) sont agencés sur la plaque de base (5).

9. Banc d'essai selon la revendication 8, **caractérisé par le fait qu'**une unité de commande de banc d'essai (75) est prévue, laquelle est connectée à l'unité de conditionnement de signal (22).

10. Banc d'essai selon la revendication 8, **caractérisé par le fait qu'**une armoire de commande (17) est prévue, laquelle commande et surveille le déplacement des parties mobiles du système de palettes (2).
